# EUROPEAN PATENT SPECIFICATION

(11) **EP 2 721 295 B1**
(45) Date of publication and mention of the grant of the patent: **30.12.2015**
(21) Application number: 12731751.9
(22) Date of filing: 05.06.2012
(51) Int. Cl.: F03D 11/02, F03D 11/00, F03D 9/00, F03D 9/02, F03D 7/02

(54) **POWER GENERATING APPARATUS OF A RENEWABLE ENERGY TYPE AND OPERATION METHOD THEREOF**
VORRICHTUNG UND ARBEITSWEISE ZUR ERZEUGUNG ERNEUERBARER ENERGIE
GÉNÉRATEUR D'ÉNERGIE RENOUVELABLE ET SON PROCÉDÉ DE FONCTIONNEMENT

(30) Priority: 30.11.2011 WO PCT/JP2011/006694
(43) Date of publication of application: 23.04.2014
(73) Proprietor: Mitsubishi Heavy Industries, Ltd., Tokyo 108-8215 (JP)
(72) Inventor: WAKASA, Tsuyoshi, Tokyo 108-8215 (JP); CALDWELL, Niall, Loanhead Midlothian Lothian EH20 9TB (GB); DUMNOV, Daniil, Loanhead Midlothian Lothian EH20 9TB (GB)
(74) Representative: Hindle, Alistair Andrew
(86) International application number: PCT/JP2012/003667
(87) International publication number: WO 2013/080397

(56) References cited:
- WO-A1-2007/053036
- WO-A2-2008/113699
- WO-A2-2010/085988
- "The Synchronous Machine", , 14 June 2010 (2010-06-14), XP055155047, Retrieved from the Internet: URL:http://ecee.colorado.edu/~ecen4517/mat erials/SynchronousMach.pdf [retrieved on 2014-11-25]

## Description

### Technical Field

The present invention relates to the field of power generating apparatus of a renewable energy type, which receives energy from a renewable energy source, and which employs at least one electricity generator driven by a hydraulic transmission to supply power to a grid. The power generating apparatus may, for example, be a wind turbine generator which receives energy from the wind or a tidal turbine generator which receives energy from flowing water.

### Background Art

WO 2008/113699, WO 2011/147996 and WO 2011/147997 (Caldwell et al.) disclose wind turbine generators which employ electricity generators driven by a hydraulic transmission to supply power to a grid. Energy is received from wind via a rotor having blades which drives a rotating shaft that in turn drives a hydraulic pump. The hydraulic pump receives hydraulic fluid from a low pressure manifold and outputs pressurised fluid to a high pressure manifold. One or more hydraulic motors receive pressurised fluid from the high pressure manifold and use the energy of the received fluid to drive an electricity generator, through a shaft. WO 2010/085988 discloses a torque regulator for e.g. changing the amount of torque transferred between turbine rotor and the synchronous generator.

The hydraulic pump and the hydraulic motor are each variable displacement machines and the displacement of the hydraulic pump and motor are controlled to optimise power generation. In order to generate power efficiently, it is important to control the torque of the rotor blades as the optimum torque varies with wind speed. This can be done by controlling the displacement of the hydraulic pump and the pressure in the high pressure manifold. The displacement of the hydraulic motor is controlled to regulate the torque applied to the electrical generator by the hydraulic motor.

It is desirable to use a synchronous generator which, when power is being supplied to the grid, is coupled to the grid without an intervening electronic power converter. This reduces power loss and increases the efficiency of power generation. However, this raises technical problems. In particular, in this case, the rotor of the synchronous generator will rotate at exactly the frequency of the electricity grid. For example, for a 4-pole generator and a 50Hz grid, the rotor would rotate at 1500rpm. Torque exerted on the generator rotor by the prime mover causes the load angle (phase angle between the rotor and the rotating magnetic field from the stator winding) to increase until the magnetic torque equals the prime mover torque. For a fixed terminal voltage and field current, the relationship between load angle and torque is approximately sinusoidal. The generator torque is proportional to the field current through the generator rotor field circuit and the terminal voltage. The strength of the rotating magnetic field defines the maximum absorbable torque of the generator. If the torque increases beyond the maximum torque value (at 90 degree load angle), the generator will slip poles. This is a dramatic and damaging event which must be avoided.

Electricity grids occasionally fail, for example, due to lightning strikes, arcing between power conductors due to high winds, short circuit currents in electrical equipment due to insulation breakdown and other electrical or mechanical faults. In many cases, when a fault occurs the terminal voltage falls to zero, or close to zero, and the current increases dramatically. When this occurs, the torque resistance drops very quickly, for example, within a few milliseconds. As the rotor remains driven by a prime mover, the rotor quickly accelerates beyond synchronous speed and pole slip can occur very quickly.

Furthermore, it is possible for pole slip to occur even in circumstances where no electrical grid fault takes place, particularly if regulating equipment is incorrectly set up. For example, the power generating apparatus will typically comprise a synchronous generator and an automatic voltage regulator. This regulator varies the generator field current in order to adjust the output voltage or power factor of the generator. If set up in voltage control mode, when the grid voltage is high and the generator is running at a high power output, the regulator may attempt to reduce the terminal voltage by reducing the field current to such an extent that the electromagnetic coupling between the rotor and the stator is too weak and pole-slipping occurs resulting in damage to the generator.

### Summary of Invention

The invention addresses the technical problem of enabling reliable and efficient operation of power generating apparatus of the type described above, while avoiding pole slip. Some embodiments of the invention address avoiding pole slip during a fault in the electricity grid. Some embodiments of the invention seek to ensure that pole slip is avoided during events which may occur during normal operation, without there necessarily being a fault in the electricity grid.

By the displacement of a hydraulic pump or motor we refer to the volume of hydraulic fluid which is displaced (either received or output) by the hydraulic pump per revolution of the rotating shaft of the hydraulic pump or motor. By the demand of displacement we refer to a signal which indicates the target time-averaged displacement.

According to a first aspect of the invention there is provided a power generating apparatus of a renewable energy type which generates power using renewable energy, comprising:
an actuated element which is actuated by energy received from a renewable energy source; a rotating shaft which is rotated by the renewable energy received via the actuated element; a hydraulic transmission which comprises a hydraulic pump driven by the rotating shaft and a hydraulic motor driven by pressurized hydraulic fluid supplied from the hydraulic pump through a high pressure manifold; a synchronous generator which is driven by the hydraulic motor to generate power and coupled to a grid without an intervening electronic power converter, the generated electricity being supplied to the grid; the generator having a field coil having a field strength, a transmission controller which controls the hydraulic transmission in a normal operation mode to adjust the displacement of each of the hydraulic pump and the hydraulic motor such that the rotating shaft rotates at a rotational speed that varies with the flow speed of the renewable energy while keeping the frequency of the electricity generated by the generator at the frequency of the grid during normal operation of the power generating apparatus,
wherein the transmission controller comprises:
   a motor demand determination unit which determines a demand Dm of the displacement of the hydraulic motor taking into account the pressure in the high pressure manifold, and also taking into account a torque limit related to the maximum torque allowable by the generator to prevent pole slip, which torque limit depends on the field strength, and measured generator terminal voltage and wherein the motor demand determination unit is configured to limit the rate of change of the displacement of the motor.

By taking into account a torque limit related to the maximum torque allowable by the generator to prevent pole slip, which torque limit depends on both the field strength and the measured generator terminal voltage, and by limiting the maximum torque taking into account this torque limit, pole slip can be avoided. Taking into account a torque limit typically comprises avoiding the torque generated by the hydraulic motor exceeding the torque limit.

The field strength depends on field current and field voltage. Typically, the torque limit is determined in dependence on at least one measurement of a parameter related to the generator field strength. In the case of a brushed generator, the field current would typically be measured and so the torque limit would depend on measured field current, with the field voltage being known. In the case of a brushless generator, an exciter is typically used to induce the field current. In this case, it is more difficult to directly measure the field current. However, the exciter field current or voltage and rotational speed can be measured, and the main generator field current ascertained from these. Therefore, the torque limit may be determined taking into account the exciter field current and/or voltage and rotational speed thereby determining the field strength. The exciter acts as an amplifier; the excited field current is controlled and measured and this is converted into an estimate of the generator main field current.

In many embodiments, field strength is regulated by controlling the field current (directly or via an exciter). As the field resistance is a known fixed value the field voltage and thereby field strength can be ascertained from field current alone.

The displacement of the hydraulic motor is linked to the frequency of the electricity generated by the generator as the hydraulic motor comprises a rotating motor shaft which is coupled to the generator rotor. The ratio need not be 1:1 as it will depend on the number of poles of the electrical generator, the number of cycles of working chamber volume per revolution of the rotating motor shaft (usually one) and (although it is less desirable) any gearing between the rotating motor shaft and the generator rotor.

The displacement of the hydraulic motor may be adjusted by adjusting a displacement demand Dₘ of the motor. Dₘ may be a volumetric demand (of hydraulic fluid) per unit of time or revolution of the motor shaft. The speed of rotation of the rotating motor shaft is typically measured and taken into account when determining the demand for displacement.

The motor demand determination unit may comprise a normal demand calculation unit which calculates the demand Dₘ of the displacement of the hydraulic motor in the normal operating mode, when the maximum torque is not limited and a torque limiter which limits the said calculated demand, when required. The motor demand determination unit typically calculates the demand taking into account a requirement to keep the pressure of the high pressure manifold within limits.

The motor demand determination module is configured (as programmed) to limit the rate of change of the displacement of the motor.

The rate limit is useful because in some circumstances, the rate of change of torque generated by the motor could cause pole slip. It may be that the field strength of the generator is varied responsive to the torque generated by the motor, for example, the torque generated by the motor may affect power output which may in turn affect the field current specified by a power factor controller and/or automatic voltage regulator, and thereby the field strength. Accordingly, in some circumstances there may be a feedback loop between the torque generated by the motor and the field voltage. In any event, there is a maximum practical rate of change of field current due to induction and the rate limit can therefore prevent pole slip. It may be that the generator field current is changed in advance of or concurrently with an increase in the torque generated by the motor using feed-forward control.

The power generating apparatus typically comprises a field coil voltage regulator which regulates the voltage of the field coil. The generator terminal voltage is typically determined at least in part by the voltage of the grid to which the generator is connected.

It may be that the torque limit is determined in dependence on at least one measurement of a parameter related to field strength and/or the measured generator terminal voltage.

It may be that the torque limit further depends on the load angle and/or the reactance of the generator field coil winding wire.

Typically, the displacement of the motor is thereby limited to the torque limit divided by the pressure of hydraulic fluid received by the motor (which is typically very similar to the high pressure manifold pressure).

It may be that the torque limit is determined taking into account stored data relating the torque at which pole slip can occur to generator terminal voltage and a parameter related to field strength (e.g. field current, exciter current etc.)

The stored data may be parameters of a model which is calculated to determine the torque limit. The stored data may comprise a look-up table. The parameters of the model or look-up table may be obtained from carrying out experiments in which the displacement of the hydraulic motor is increased at constant terminal voltage and field strength (e.g. constant field current or constant exciter current etc. as appropriate) until pole slip occurs.

It may be that the torque limit is determined so that the torque of the hydraulic motor remains below the maximum torque at which pole slip would occur by at least a predetermined margin. Thus, although the torque limit is related to (e.g., proportional to, or within a fixed amount of) the maximum torque, it will typically be less than the maximum torque.

It may be that the transmission controller comprises:
a target torque determination unit which, in the normal operation mode, determines a target torque of the hydraulic pump based on an optimal torque of the rotating shaft in accordance with turbine speed;
a pump demand determination unit which, in the normal operation mode, determines a demand Dₚ of the displacement of the hydraulic pump from the target torque of the hydraulic pump; and
a pump control unit which adjusts the displacement of the hydraulic pump to meet the demand Dₚ.

The power generating apparatus of a renewable energy type may further comprise:
a terminal voltage sensor which measures the generator terminal voltage;
an exciter which supplies a field current to a field winding of the synchronous generator; and
an exciter controller which controls the exciter based on a difference between the terminal voltage detected by the terminal voltage detector and a target value for the terminal voltage.

It may be that the exciter controller controls the exciter such that the field current is increased immediately after the terminal voltage of the synchronous generator decreases due to a fault event at the grid or a transmission line from the synchronous generator to the grid.

When the fault even occurs at the transmission line or the grid, the terminal voltage of the generator declines abruptly, instantly lowering the electrical output power (active power) of the generator. Thus, the mechanical input power from the hydraulic motor becomes excessive with respect to the electrical output power of the generator, causing the rotator of the generator to accelerate. This may result in pole slip of the generator. Thus, by increasing the field current immediately after the terminal voltage of the generator decreases due to the fault event at the transmission line or the grid, the induced voltage inside the generator increases, causing the electrical output power of the generator to increase. Therefore, the synchronizing power of the generator increases, suppressing the first-wave swing of the generator after the occurrence of the fault event. As a result, the transient ability is improved. In this manner, pole slip of the generator is prevented.

Further, the above control of the exciter to enhance transient stability can be preferably performed by a superquick excitation system which is an excitation system of an extremely fast response speed, such as a thyristor excitation system.

It may be that after increasing the field current by the exciter, the exciter controller controls the exciter such that the field current is increased when an internal phase angle of the synchronous generator increases and is decreased when the internal phase angle of the synchronous generator decreases.

By increasing the field current immediately after the decline of the terminal voltage due to the fault event, the first-wave swing of the synchronous generator is suppressed as described above, hence improving the transient stability. However, the improved responsiveness may impair the steady-state stability after the first-wave swing. Therefore, the field current is increased when increasing the internal phase angle and the field current is reduced when reducing the internal phase angle so as to suppress the swing of the generator promptly and to improve the steady-state stability. The above control of the exciter to improve the steady-state stability is preferably achieved by means of a power system stabilizer (PSS).

It may be that the transmission controller has a fault event response mode in which the displacement of the hydraulic motor is reduced in comparison to the normal operating mode, wherein the fault event response mode is entered in response to detection that the measured generator terminal voltage has fallen below a threshold.

A fault in the electricity grid could, for example, include a short circuit, a low voltage event or a fault in a transmission line.

It may be that the transmission controller controls the hydraulic transmission in the fault event response mode to reduce the displacement of the hydraulic motor to regulate (e.g., minimise) the difference between the load torque of the synchronous generator and the torque generated by the hydraulic motor and inputted to the synchronous generator. This reduces acceleration of the generator which would otherwise occur when there is a fault, leading to pole slip.

It may be that the motor demand determination unit determines the demand Dₘ of the displacement of the hydraulic motor based on the power generated by the synchronous generator in the fault event response mode.

It may be that the transmission controller leaves the fault event response mode when the measured generator voltage rises above a threshold which may be higher than the threshold which causes the transmission controller to enter the fault response operating mode to implement hysteresis and avoid chatter.

The difference between the threshold voltage at which the transmission controller enters and leaves the fault event response mode is in the range of 5-10%.

The actuated element is typically a rotor, for example, in the case of a wind turbine generator or a tidal turbine generator. However, other types of actuated element are known, for example in wave power generation devices. Such actuated elements may for example be reciprocators which reciprocate in response to received energy, thereby driving the rotating shaft.

Typically, the rotor comprises one or more blades.

The power generating apparatus of a renewable energy type may further comprise a pitch driving mechanism which adjusts a pitch angle of the one or more blades, wherein the pitch driving mechanism changes the pitch angle of the one or more blades toward a feathering position in the fault event response mode.

It may be that after recovery from the fault event starts, the pitch driving mechanism changes the pitch angle of the one or more blades toward a fine position and the motor demand determination unit increases the demand Dm of the displacement of the hydraulic motor to increase the power generated by the synchronous generator.

The power generating apparatus may be a wind turbine generator which generates power using wind as the renewable energy.

It may be that the displacement demand to the pump is limited such that the power obtained from the renewable energy is limited by the power delivered to the generator by the hydraulic motor. Typically, the displacement demand to the pump is reduced as soon as the displacement demand to the motor is reduced when the controller enters the fault response operating mode.

The hydraulic motor typically comprises a plurality of working chambers of cyclically varying volume, an a plurality of valves for regulating the flow of fluid between the low and high pressure manifolds, wherein at least one said valve associated with each working chamber is an electronically controlled valve and the hydraulic motor comprises a controller which actively control the said electronically controlled valves on each cycle of working chamber volume to select the net displacement of hydraulic fluid through the hydraulic machine. Typically, at least two valves associated with each working chamber are electronically controlled valves which are controlled by the controller, namely a low pressure valve which regulates the flow of hydraulic fluid between each working chamber and the low pressure manifold and a high pressure valve which regulates the flow of hydraulic fluid between each working chamber and the high pressure manifold.

Typically, the hydraulic fluid is a hydraulic liquid. Typically, the synchronous generator is a brushless synchronous generator. Where the power generating apparatus is a wind turbine generator, the wind turbine generator may comprise a tower having a height of at least 25m, or at least 50m or at least 100m. The wind turbine generator may be an offshore wind turbine generator.

Thus, the invention enables a power generating apparatus of the renewable energy type to function reliably, without pole slip, despite the electrical generator being in direct electrical communication, without an intervening electronic power converter, with an electricity grid.

### Brief Description of Drawings

An example embodiment of the present invention will now be illustrated with reference to the following Figures in which:
[fig.1]Figure 1 shows a wind turbine generator connected to an electricity grid and implementing the invention;
[fig.2]Figure 2 shows a hydraulic motor for use in the wind turbine generator of Figure 1;
[fig.3]Figure 3 shows a section of a pump for use in the wind turbine generator of Figure 1;
[fig.4]Figure 4 is a schematic diagram of functional units of the controller;
[fig.5A]Figure 5A shows the computational steps for one time-step of a control algorithm for controlling the wind turbine generator in the normal operating mode; and
[fig.5B]5B is a continuation of 5A.

### Description of Embodiments

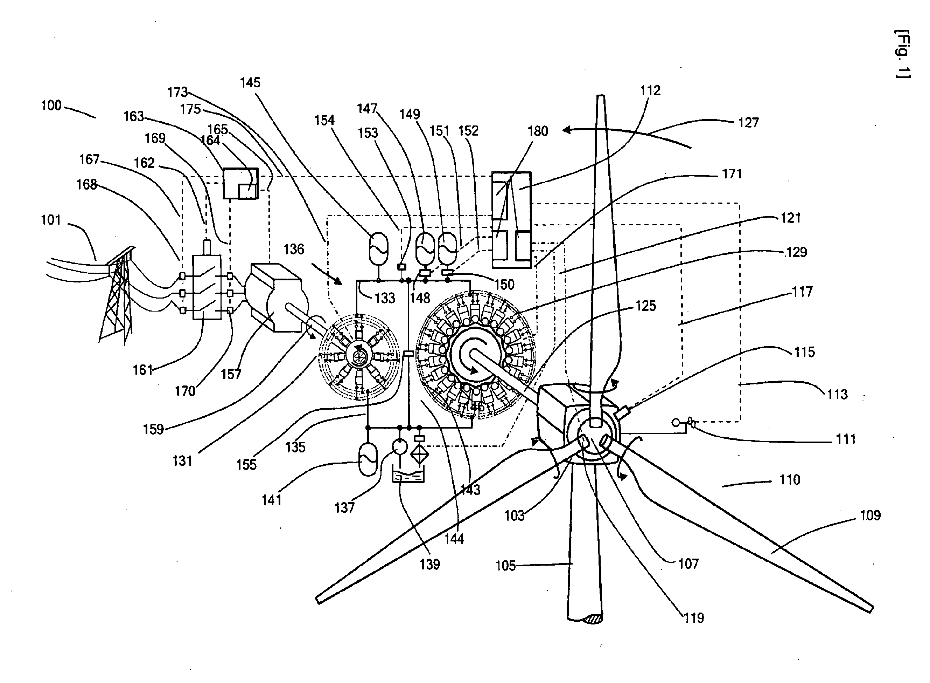

Figure 1 illustrates an example embodiment of the invention in the form of a Wind Turbine Generator (WTG, 100), acting as the energy extraction device, and connected to an electricity grid (101). The WTG comprises a nacelle (103) rotatably mounted to a tower (105) and having mounted thereon a hub (107) supporting three blades (109) known collectively as the rotor (110). An anemometer (111) attached externally to the nacelle provides a measured wind speed signal (113) to a controller (112), which functions as the transmission controller. A rotor speed sensor (115) at the nacelle provides the controller with a rotor speed signal (117, acting as the current rotation rate of the rotating shaft). In the example system the angle of attack of each of the blades to the wind can be varied by a pitch actuator (119), which exchanges pitch actuation signals and pitch sensing signals (121) with the controller. The invention could be applied to a WTG without a pitch actuator. The controller is typically a microprocessor or microcontroller, which executes a stored program in use, although some or all of the function of the controller can be implemented as electronic circuits. The controller can take the form of a plurality of microprocessors or microcontrollers which may be distributed and which individually carry out a subset of the overall function of the controller.

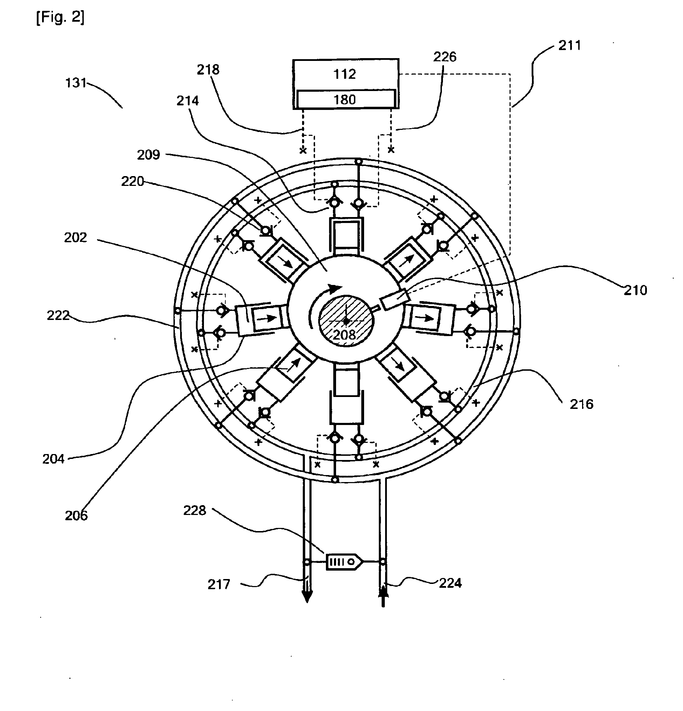

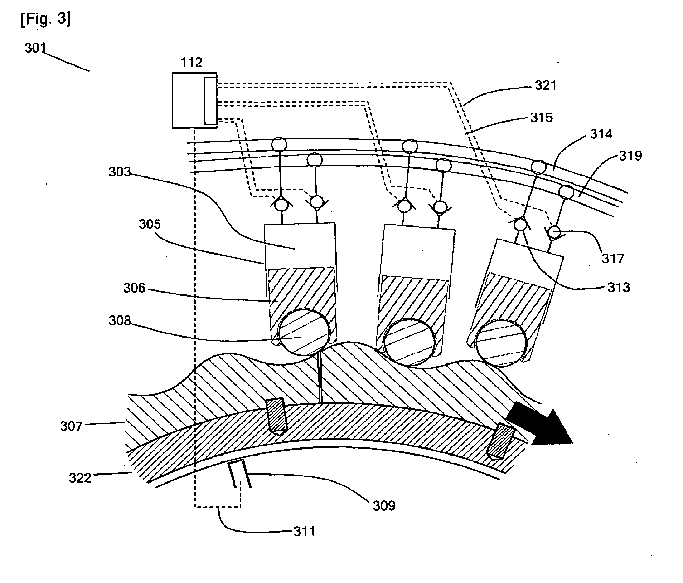

The hub is connected directly to a pump (129), through a rotor shaft (125), acting as the rotatable shaft, which rotates in the direction of rotor rotation (127). The pump is preferably of the type described with reference to Figure 3, and has a fluid connection to a hydraulic motor (131), preferably of the type described with reference to Figure 2. The fluid connection between the pump and the hydraulic motor is through a high pressure manifold (133) and a low pressure manifold (135), connected to their high pressure port and low pressure port respectively, and is direct in the sense that there are no intervening valves to restrict the flow. The pump, hydraulic motor, low pressure manifold and high pressure manifold and related components together form the hydraulic transmission (136).

The pump and hydraulic motor are can be mounted directly one to the other so that the high pressure manifold and low pressure manifold are formed between and within them. A charge pump (137) continuously draws fluid from a reservoir (139) into the low pressure manifold, which is connected to a low pressure accumulator (141). A low pressure relief valve (143) returns fluid from the low pressure manifold to the reservoir through a heat exchanger (144) which is operable to influence the temperature of the working fluid and is controllable by the controller via a heat exchanger control line (146). A smoothing accumulator (145) is connected to the high pressure manifold between the pump and the hydraulic motor. A first high pressure accumulator (147) and a second high pressure accumulator (149) (together acting as the elastically deformable fluid retaining body) are connected to the high pressure manifold through a first isolating valve (148) and a second isolating valve (150) respectively. The first and second high pressure accumulators may have different precharge pressures, and there may be additional high pressure accumulators with an even wider spread of precharge pressures. The states of the first and second isolating valves are set by the controller through first (151) and second (152) isolating valve signals respectively. Fluid pressure in the high pressure manifold is measured with a pressure sensor (153), which provides the controller with a high pressure manifold pressure signal (154). The pressure sensor may optionally also measure the fluid temperature and provide a fluid temperature signal to the controller. A high pressure relief valve (155) connects the high pressure and low pressure manifolds.

The hydraulic motor is connected to a synchronous generator (157), acting as the load, through a generator shaft (159). The generator is connected to an electricity grid through a contactor (161), which receives a contactor control signal (162) from a generator and contactor controller (163) and is operable to selectively connect the generator to or isolate the generator from the electricity grid. When the contactor connects the generator to the electricity grid, the generator is coupled to the electricity grid without an intervening electronic power converter which would otherwise reduce the efficiency of electricity generation. The generator and contactor controller receives measurements of voltage, current and frequency from electricity supply signals (167) and generator output signals (169), measured by electricity supply sensors (168) and generator output sensors (170) respectively, communicates them to the controller (112) and controls the output of the generator by adjusting the current and/or field voltage by way of generator control signals (165) in accordance with generator and contactor control signals (175) from the controller. The generator and contactor controller includes a current regulation module which functions as a power factor controller (164) which matches the power factor of the output from the generator to the requirements of the grid and typically also functions as an automatic voltage regulator. Regulating the power factor involves regulating the field current which, in the case of a brushless synchronous generator is carried out by an exciter 166.

The pump and motor report the instantaneous angular position and speed of rotation of their respective shafts, and the temperature and pressure of the hydraulic oil, to the controller, and the controller sets the state of their respective valves, via pump actuation signals and pump shaft signals (171) and motor actuation signals and motor shaft signals (173). The controller uses power amplifiers (180) to amplify the pitch actuation signals, the isolating valve signals, the pump actuation signals and the motor actuation signals.

Figure 2 illustrates the hydraulic motor (131) in the form of an electronically commutated hydraulic pump/motor comprising a plurality of working chambers (202, designated individually by letters A to H) which have volumes defined by the interior surfaces of cylinders (204) and pistons (206) which are driven from a rotatable shaft (208) by an eccentric cam (209) and which reciprocate within the cylinders to cyclically vary the volume of the working chambers. The rotatable shaft is firmly connected to and rotates with the generator shaft (159). The hydraulic motor may comprise a plurality of axially-spaced banks of working chambers driven from the same shaft by similarly spaced eccentric cams. A shaft position and speed sensor (210) determines the instantaneous angular position and speed of rotation of the shaft, and through signal line (211, being some of the motor actuation and motor shaft signals 173) informs the controller (112), which enables the controller to determine the instantaneous phase of the cycles of each working chamber. The controller is typically a microprocessor or microcontroller, which executes a stored program in use. The controller can take the form of a plurality of microprocessors or microcontrollers which may be distributed and which individually carry out a subset of the overall function of the controller.

The working chambers are each associated with Low Pressure Valves (LPVs) in the form of electronically actuated face-sealing poppet valves (214), which face inwards toward their associated working chamber and are operable to selectively seal off a channel extending from the working chamber to a low pressure conduit (216), which functions generally as a net source or sink of fluid in use and may connect one or several working chambers, or indeed all as is shown here, to a low pressure port (217) which is fluidically connected to the low pressure manifold (135) of the WTG. The LPVs are normally open solenoid closed valves which open passively when the pressure within the working chamber is less than or equal to the pressure within the low pressure manifold, i.e. during an intake stroke, to bring the working chamber into fluid communication with the low pressure manifold, but are selectively closable under the active control of the controller via LPV control lines (218, being some of the motor actuation and motor shaft signals 173) to bring the working chamber out of fluid communication with the low pressure manifold. Alternative electronically controllable valves may be employed, such as normally closed solenoid opened valves.

The working chambers are each further associated with High Pressure Valves (HPVs) (220) in the form of pressure actuated delivery valves. The HPVs open outwards from the working chambers and are operable to seal off a channel extending from the working chamber to a high pressure conduit (222), which functions as a net source or sink of fluid in use and may connect one or several working chambers, or indeed all as is shown here, to a high pressure port (224, acting as the inlet of the hydraulic motor) which is in fluid communication with the high pressure manifold (133). The HPVs function as normally-closed pressure-opening check valves which open passively when the pressure within the working chamber exceeds the pressure within the high pressure manifold. The HPVs also function as normally-closed solenoid opened check valves which the controller may selectively hold open via HPV control lines (226, being some of the motor actuation and motor shaft signals 173) once that HPV is opened by pressure within the associated working chamber. Typically the HPV is not openable by the controller against pressure in the high pressure manifold. The HPV may additionally be openable under the control of the controller when there is pressure in the high pressure manifold but not in the working chamber, or may be partially openable, for example if the valve is of the type and is operated according to the method disclosed in WO 2008/029073 or WO 2010/029358.

In a normal mode of operation described in, for example, EP 0 361 927, EP 0 494 236, and EP 1 537 333, the contents of which are hereby incorporated herein by way of this reference, the controller selects the net rate of displacement of fluid from the high pressure manifold by the hydraulic motor by actively closing one or more of the LPVs shortly before the point of minimum volume in the associated working chamber's cycle, closing the path to the low pressure manifold which causes the fluid in the working chamber to be compressed by the remainder of the contraction stroke. The associated HPV opens when the pressure across it equalises and a small amount of fluid is directed out through the associated HPV. The controller then actively holds open the associated HPV, typically until near the maximum volume in the associated working chamber's cycle, admitting fluid from the high pressure manifold and applying a torque to the rotatable shaft. In an optional pumping mode the controller selects the net rate of displacement of fluid to the high pressure manifold by the hydraulic motor by actively closing one or more of the LPVs typically near the point of maximum volume in the associated working chamber's cycle, closing the path to the low pressure manifold and thereby directing fluid out through the associated HPV on the subsequent contraction stroke (but does not actively hold open the HPV). The controller selects the number and sequence of LPV closures and HPV openings to produce a flow or create a shaft torque or power to satisfy a selected net rate of displacement. As well as determining whether or not to close or hold open the LPVs on a cycle by cycle basis, the controller is operable to vary the precise phasing of the closure of the HPVs with respect to the varying working chamber volume and thereby to select the net rate of displacement of fluid from the high pressure to the low pressure manifold or vice versa.

Arrows on the ports (217,224) indicate fluid flow in the motoring mode; in the pumping mode the flow is reversed. A pressure relief valve (228) may protect the hydraulic motor from damage.

Figure 3 illustrates in schematic form a portion (301) of the pump (129) with electronically commutated valves. The pump consists of a number of similar working chambers (303) in a radial arrangement, of which only three are shown in the portion in Figure 3. Each working chamber has a volume defined by the interior surface of a cylinder (305) and a piston (306), which is driven from a ring cam (307) by way of a roller (308), and which reciprocates within the cylinder to cyclically vary the volume of the working chamber. The ring cam may be broken into segments mounted on the shaft (322), which is firmly connected to the rotor shaft (125). There may be more than one bank of radially arranged working chambers, arranged axially along the shaft. Fluid pressure within the low pressure manifold, and thus the working chambers, greater than the pressure surrounding the ring cam, or alternatively a spring (not shown), keeps the roller in contact with the ring cam. A shaft position and speed sensor (309) determines the instantaneous angular position and speed of rotation of the shaft, and informs a controller (112), by way of electrical connection (311, being some of the pump actuation and pump shaft signals 171), which enables the controller to determine the instantaneous phase of the cycles of each individual working chamber.

Each working chamber comprises a low pressure valve (LPV) in the form of an electronically actuated face-sealing poppet valve (313) which faces inwards toward the working chamber and is operable to selectively seal off a channel extending from the working chamber to a low pressure conduit (314), which functions generally (in the pumping mode) as a net source of fluid in use (or sink in the case of motoring). The low pressure conduit is fluidically connected to the low pressure manifold (135). The LPV is a normally open solenoid closed valve which opens passively when the pressure within the working chamber is less than the pressure within the low pressure conduit, during an intake stroke, to bring the working chamber into fluid communication with the low pressure manifold, but is selectively closable under the active control of the controller via an electrical LPV control signal (315, being some of the pump actuation and pump shaft signals 171) to bring the working chamber out of fluid communication with the low pressure manifold. Alternative electronically controllable valves may be employed, such as normally closed solenoid opened valves.

The working chamber further comprises a high pressure valve (HPV, 317) in the form of a pressure actuated delivery valve. The HPV faces outwards from the working chamber and is operable to seal off a channel extending from the working chamber to a high pressure conduit (319), which functions as a net source or sink of fluid in use and is in fluid communication with the high pressure manifold (133). The HPV functions as a normally-closed pressuring-opening check valve which opens passively when the pressure within the working chamber exceeds the pressure within the high pressure manifold. The HPV may also function as a normally-closed solenoid opened check valve which the controller may selectively hold open via an HPV control signal (321, being some of the pump actuation and pump shaft signals 171) and once the HPV is opened, by pressure within the working chamber. The HPV may be openable under the control of the controller when there is pressure in the high pressure manifold but not in the working chamber, or may be partially openable.

In a normal mode of operation described in the prior art (for example, EP 0 361 927, EP 0 494 236, and EP 1 537 333), the controller selects the net rate of displacement of fluid to the high pressure manifold by the hydraulic pump by actively closing one or more of the LPVs typically near the point of maximum volume in the associated working chamber's cycle, closing the path to the low pressure manifold and thereby directing fluid out through the associated HPV on the subsequent contraction stroke. The controller selects the number and sequence of LPV closures to produce a flow or apply a torque to the shaft (322) to satisfy a selected net rate of displacement. As well as determining whether or not to close or hold open the LPVs on a cycle by cycle basis, the controller is operable to vary the precise phasing of the closure of the LPVs with respect to the varying working chamber volume and thereby to select the net rate of displacement of fluid from the low pressure manifold to the high pressure manifold.

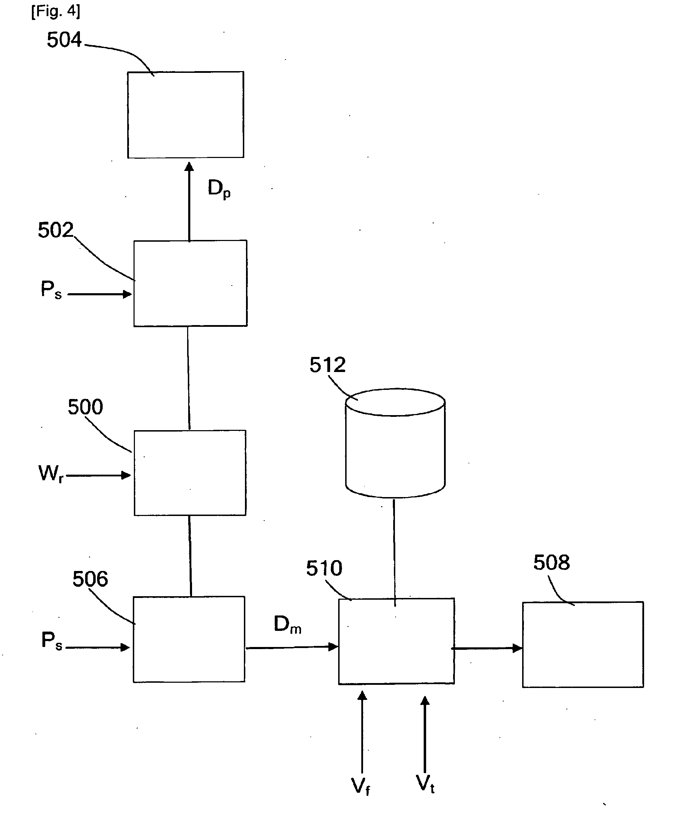

Figure 4 is a schematic diagram of functional units of the controller (112). The functional units may be electronic circuits or program code instructions stored on a computer readable medium and executed by a computer processor.

The controller (112), which functions as the transmission controller, includes a target torque determination unit (500) which determines a target torque of the hydraulic pump taking into account an optimal torque of the rotating shaft which depends on the current rotor speed Wᵣ. The target torque is output to a pump demand determination unit (502) which determines the correct pump demand Dₚ (expressed as a function of the amount of hydraulic fluid to be displaced per rotation of the rotating shaft of the pump) required to obtain that torque taking into account current system pressure Pₛ. The pump demand Dₚ is output to a pump control unit (504) which actively controls the LPVs of the pump by issuing suitable control signals to thereby select the displacement of the pump on a cycle by cycle basis to meet the demand.

The speed of rotation of the rotor shaft (125) therefore varies with the speed of the wind (and therefore the flow speed of energy from the wind) although the precise speed depends on a range of factors, including the system pressure, a desire to keep the system pressure within an acceptable range, transient requirements to start up or stop the device or to adjust the system pressure for other reasons (e.g. in advance of a gust of wind or to work in concert with other WTGs).

The controller also includes a normal motor demand determination unit (506) which determines the target displacement of the hydraulic motor Dₘ taking into account the instantaneous system pressure Pₛ (the pressure in the high pressure manifold) but ignoring the torque limit (where applied). Although not central to the present invention, as is discussed below, there can in some embodiments be some interaction between the target torque determination unit (500) which determines the target torque of the pump and the normal motor demand determination unit (506), for example, to keep the system pressure within a defined range.

The normal motor demand determination unit (506) calculates and outputs Dₘ which, during normal operation, is relayed to a motor control unit (508) which generates LPV and HPV control signals on each cycle of motor working chamber volume to thereby regulate the displacement of the hydraulic motor to meet the demand Dₘ.

However, there is also provided a torque limiter (510) which acts to ensure that the motor displacement will not cause pole slip. The torque limiter has access to a database (512) of torque values at which pole slip can occur for given values of generator field current (which determines field strength) and generator terminal voltage. The function of the torque limiter is discussed below. The target torque determination unit (500) and torque limiter (570) together function as the motor demand determination unit.

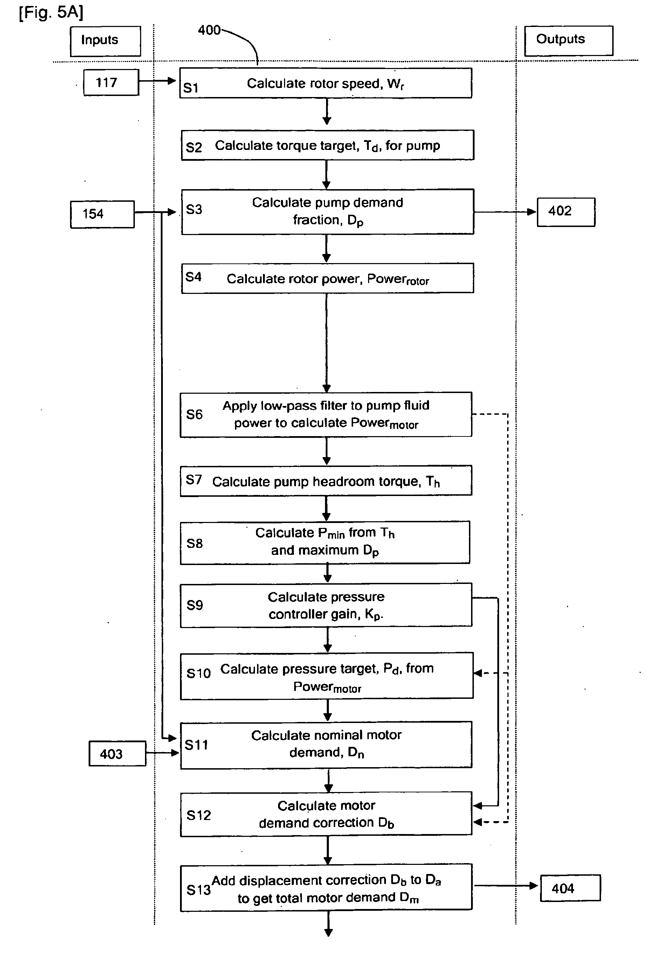

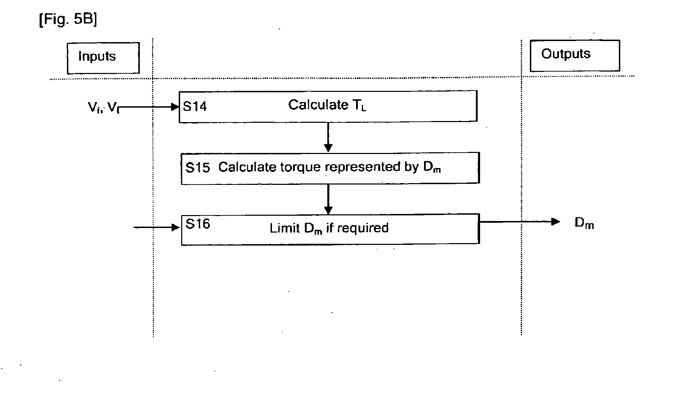

Figures 5A and 5B (which is a continuation of Figure 5A) show one time-step of the operation of a control algorithm (400) as it is carried out in a normal operation mode of the WTG, and executed within the controller (112). The algorithm is executed repeatedly in use.

At step S1 the rotor speed Wᵣ is calculated from the rotor speed signal (117). Alternatively the rotational speed of the pump may be measured as the pump and rotor are directly connected by the rotor shaft. A torque target, Td, is calculated at step S2 from the rotor speed. As is known from WO 2011/147996 and WO 2011/147997 (Caldwell et al.), the contents of which are incorporated herein by virtue of this reference, the target torque may be adjusted from the aerodynamically ideal rotor torque, for example to decrease the system pressure Ps before a lull to enable more energy to be stored during the lull.

At step S3 T_{d} is divided by the measured pressure of the high pressure manifold (from the HP pressure signal, 154) to calculate a pump demand Dₚᵤₘₚ. The pump demand is the selected net rate of displacement of the pump and is an output (402) of the control algorithm, used by the controller to selectively operate the LPVs (and possibly HPVs) of the pump in the manner described above.

At step S4, the controller calculates the power in the fluctuating energy flow Power rotor. This can be done in a number of different ways, for example: using the known rotation rate of the pump, the selected net rate of displacement of the pump, and the pressure in the high pressure manifold to calculate the hydraulic power output; or using the known rotation rate of the rotor and the estimated aerodynamic torque Tₐₑᵣₒ to calculate the mechanical power output.

A smoothed version of the fluctuating energy flow, Powerₘₒₜₒᵣ, is calculated at step S6, by executing a smoothing module, for example a first order low pass filter, on Powerᵣₒₜₒᵣ. The designer may choose the smoothing algorithm to suit the WTG and the conditions. The smoothed version forms the basis of calculating the net rate of displacement of working fluid by the hydraulic motor, and is selected without regard to the effect of that rate on the pressure within the high pressure manifold, i.e. independently of it.

A headroom torque, Tₕ, is calculated at step S7. The headroom torque defines the minimum torque the pump must be able to apply to the rotor shaft at 'short notice' to properly control the rotor speed during unexpected gusts or wind increases. The headroom torque is a function of the rotational speed of the pump.

Rotor torque is the product of the pump selected net rate of displacement per revolution (which has a design limit fixed by the number of working chambers and their volume) and high pressure manifold pressure, so the torque headroom requirement provides a lower limit to Pₘᵢₙ. A minimum pressure of the high pressure manifold, Pₘᵢₙ, is calculated from Tₕ in step S8, and defines the lower limit of the acceptable pressure range. In addition the minimum precharge pressure P_{acc,min} of the smoothing (or first and second accumulators) provides an additional lower limit to Pₘᵢₙ below which there may be insufficient compliance in the high pressure manifold to achieve desirable operation. Pₘᵢₙ, and thus the acceptable pressure range, must be above both lower limits.

The minimum pressure of the high pressure manifold Pₘᵢₙ, the design maximum pressure of said manifold Pₘₐₓ (acting as an upper limit of the acceptable pressure range), and either the fluctuating energy flow or the smoothed version thereof, are used in step S9 to calculate a pressure controller gain, Kₚ.

In step S10 a target pressure, P_{d}, is calculated from one or more of the optimum operating points of the WTG, the operating range limits of the WTG or a minimum pressure requirement.

The steps to date implement the function of the pump torque demand determination unit (502). The next few steps implement the function of the motor demand determination unit.

Next the controller calculates a nominal value for the net rate of displacement of the motor (motor demand), Dₙ, at step S11. The nominal motor demand is calculated from the motor speed signal 211, the system (i.e. high pressure manifold) pressure signal (154) and Powerₘₒₜₒᵣ (Dₙ = Powerₘₒₜₒᵣ / Wₘₒₜₒᵣ /Pₛ).

At step S12 the algorithm calculates a motor demand correction, D_{b}, by multiplying the difference between the measured pressure and the target pressure P_{d} by the pressure controller gain Kₚ.

At step S13, the controller calculates the net rate of displacement of the motor (motor demand), Dₘ, by adding together the nominal motor demand Dₙ and the demand correction D_{b}.

In normal operation, the motor demand Dₘ is an output of the control algorithm (404), used by the controller to selectively operate the valves of the motor in the manner described above.

At steps S14 and S 15, the controller implements the function of the torque limiter. At step S14, the controller calculates the maximum absorbable torque of the generator, that is to say, the torque limit T_{L} at which pole slip could occur. This is carried out by reading the current values of the exciter current, IF (which is related to field current and therefore field strength) and generator terminal voltage, V_{T} and looking up the corresponding torque limit values in the database, interpolating between values stored in the database where required. The data in the database can been obtained by empirical measure of the torque at which pole slip occurs in similar generators for a given exciter current and generator terminal voltage.

At step S 15 the controller calculates the torque which would be exerted by the generator if calculated demand Dₘ is send to the motor control unit. The torque exerted by the generator is proportional to the displacement, the system pressure Pₛ and w (the speed of rotation of the motor shaft) and so the torque limiter can determine the displacement Dₘ which would lead to a given torque limit being exceeded.

At step S16, the controller determines whether to reduce Dₘ in order to limit the torque. Dₘ would be reduced if the torque which the generator would exert exceeds the torque limit T_{L}. In practice, the torque limiter typically ensures that the torque applied to the generator is not within a margin (e.g. 5% or 10% or more) of the torque limit T_{L}.

In some embodiments, the data stored in the database is not T_{L} but a value which already has a built in margin. In some embodiments, a desired motor torque is calculated, and processed to not exceed the torque limit (e.g., by selecting the lowest of the desired motor torque and the torque limit) and then the processed torque is used to calculated the displacement Dₘ.

A final value of Dₘ is then output S17 to the motor control unit which controls the timing of LPV and HPV actuation on successive cycles of working chamber volume so that the displacement of the motor meets the indicated demand.

In some embodiments, the torque limiter function implements a maximum rate of change of the torque exerted by the generator, by calculating Dₘ as normal but restricting the slew rate of the output value of Dₘ. The allowed slew rate typically depends on the response speed of the power factor controller and/or automatic voltage regulator.

The torque limiter can be useful during normal operation of the WTG, for example to avoid pole slip if the field strength decreases in use to maintain a required power factor (e.g., around unity). However, in some embodiments of the invention, the torque limiter function is triggered in response to detection of a fault in the grid which will reduce the torque at which the generator will pole slip. Such a fault can be detected from a decrease in the measured terminal voltage at the generator. In response to detection of such a fault, the WTG enters a fault event response mode and in some embodiments the torque limiter function is active only in the fault event response mode.

The torque limit function is especially important in response to such faults. When there is a fault in the grid which reduces the generator terminal voltage, or a fault which causes a decrease in the field strength, the torque limit T_{L} will rapidly collapse. As the hydraulic motor controls electronic valves to select the volume of fluid displaced on each cycle working chamber volume, it can respond quickly, avoiding damage to the generator.

The fault event response mode (and therefore the torque limiter in embodiments with the torque limiter is activated in response the fault event response mode) may, for example, be triggered by the generator terminal voltage dropping below a threshold. The WTG can return to its normal operating mode when the generator terminal voltage goes back above the threshold. Typically, this will be implemented with some hysteresis, to avoid chattering of the displacement demand sent to motor control unit.

The generator and contactor controller (163) which controls the exciter (166) and thereby controls the generator field current and therefore field strength using control signals 165 also regulates the field current and therefore field strength after a fault has been detected. The generator and contactor controller measures the difference between the measured instantaneous generator terminal voltage and a reference value and if the generator terminal voltage decreases, the generator field voltage is increased, to offset the drop in torque limit T_{L}. The generator and contactor controller also acts to increase the field current when the internal phase angle of the generator increases, as increased phase angle leads to a higher risk of pole slip.

The invention also envisages modifying the displacement of the pump in response to detection of a fault. In some embodiments, a feed forward control module reduces the displacement of the pump shortly after (e.g. immediately) that a fault is detected, reducing the rate of energy absorption by the pump and thereby avoiding an excessive build up of pressure in the high pressure manifold as the displacement of the motor falls.

One skilled in the art will appreciate that the functions of the controller can be implemented in computer software or electronic circuitry, or a mixture of the two.

The invention has therefore provided a WTG or other power generating apparatus of a renewable energy type which can operate reliably without pole slip even though the synchronous generator is directly connected to a grid, without an intervening electronic power converter, to improve energy efficiency.

Further variations and modifications may be made within the scope of the invention herein disclosed.

### Reference Signs List

- 100: Wind Turbine Generator (power generating apparatus of a renewable energy type)
- 101: Electricity grid
- 103: Nacelle
- 105: Tower
- 107: Hub
- 109: Blades
- 110: Rotor (actuated element)
- 111: Anemometer
- 112: Transmission controller
- 113: Measured wind speed signal
- 115: Rotor speed sensor
- 117: Rotor speed signal
- 119: Pitch actuator
- 121: Pitch sensing signals
- 125: Rotor shaft
- 127: Direction of rotor rotation
- 131: Hydraulic motor
- 133: High pressure manifold
- 135: Low pressure manifold
- 136: Hydraulic transmission
- 137: Charge pump
- 139: Reservoir
- 141: Low pressure accumulator
- 143: Low pressure relief valve
- 144: Heat exchanger
- 145: Smoothing accumulator
- 146: Heat exchanger control line
- 147: First high pressure accumulator
- 149: Second high pressure accumulator
- 150: Second isolating valve
- 151: First isolating valve signal
- 152: Second isolating valve signal
- 154: High pressure manifold pressure signal
- 155: High pressure relief valve
- 157: Synchronous generator
- 159: Generator shaft
- 161: Contactor
- 162: Contactor control signal
- 163: Contactor controller
- 164: Power factor controller/automatic voltage regulator
- 165: Generator control signals
- 166: Exciter
- 167: Electricity supply signals
- 168: Electricity supply sensors
- 169: Generator output signals
- 170: Generator output sensors
- 171: Pump shaft signals
- 173: Motor shaft signals
- 175: Contactor control signals
- 180: Power amplifiers
- 292: Working chambers
- 204: Cylinders
- 206: Pistons
- 208: Rotatable shaft
- 209: Eccentric cam
- 210: Shaft position and speed sensor
- 211: Signal line
- 214: Low pressure poppet valves
- 216: Low pressure conduit
- 217: Low pressure port
- 218: Low pressure valve control lines
- 220: High pressure valves
- 222: High pressure conduit
- 224: High pressure port
- 226: High pressure valve control lines
- 228: Pressure relief valve
- 301: Portion of pump
- 303: Working chambers
- 305: Cylinder
- 306: Piston
- 307: Ring cam
- 308: Roller
- 309: Shaft position and speed sensor
- 311: Electrical connection
- 313: Low pressure poppet valve
- 314: Low pressure conduit
- 315: Low pressure valve control signal
- 317: High pressure valve
- 319: High pressure conduit
- 321: High pressure control signal
- 322: Shaft
- 400: Control algorithm
- 402: Pump demand
- 404: Motor demand output, Dₘ
- 500: Target torque determination unit
- 502: Pump demand determination unit
- 504: Pump control unit
- 506: Normal motor demand determination unit
- 508: Motor control unit
- 510: Torque limiter
- 512: Database of torque limit values

## Claims

1. A power generating apparatus of a renewable energy type which generates power using renewable energy, comprising:
an actuated element which is actuated by energy received from a renewable energy source; a rotating shaft which is rotated by the renewable energy received via the actuated element; a hydraulic transmission which comprises a hydraulic pump driven by the rotating shaft and a hydraulic motor driven by pressurized hydraulic fluid supplied from the hydraulic pump through a high pressure manifold;
a synchronous generator which is driven by the hydraulic motor to generate power and coupled to a grid without an intervening electronic power converter, the generated power being supplied to the grid; the generator having a field coil having a field strength, a transmission controller which controls the hydraulic transmission in a normal operation mode to adjust the displacement of each of the hydraulic pump and the hydraulic motor such that the rotating shaft rotates at a rotational speed that varies with the flow speed of the renewable energy while keeping the frequency of the electricity generated by the generator on the frequency of the grid during normal operation of the power generating apparatus, wherein the transmission controller comprises:
a motor demand determination unit which determines a demand Dm of the displacement of the hydraulic motor taking into account the pressure in the high pressure manifold, and also taking into account a torque limit related to the maximum torque allowable by the generator to prevent pole slip, which torque limit depends on the field strength, and measured generator terminal voltage, **characterised in that** the motor demand determination unit is configured to limit the rate of change of the displacement of the motor.

2. A power generating apparatus of a renewable energy type according to claim 1, wherein the torque limit is determined in dependence on at least one measurement of a parameter related to the field strength and/or the measured generator terminal voltage.

3. A power generating apparatus of a renewable energy type according to claim 2, wherein the torque limit further depends on the load angle and/or the reactance of the generator field coil winding wire.

4. A power generating apparatus of a renewable energy type according to claim 2, wherein the displacement of the motor is limited to the torque limit divided by the pressure of hydraulic fluid received by the motor.

5. A power generating apparatus of a renewable energy type according to claim 2, wherein the torque limit is determined taking into account stored data relating the torque at which pole slip can occur to generator terminal voltage and a parameter related to field strength.

6. A power generating apparatus of a renewable energy type according to claim 4, wherein the torque limit is determined so that the torque of the hydraulic motor remains below the maximum torque at which pole slip would occur by at least a predetermined margin.

7. A power generating apparatus of a renewable energy type according to claim 1, wherein the transmission controller comprises:
a target torque determination unit which, in the normal operation mode, determines a target torque of the hydraulic pump based on an optimal torque of the rotating shaft in accordance with turbine speed; a pump demand determination unit which, in the normal operation mode, determines a demand Dp of the displacement of the hydraulic pump from the target torque of the hydraulic pump;
and a pump control unit which adjusts the displacement of the hydraulic pump to meet the demand Dp.

8. A power generating apparatus of a renewable energy type according to claim 1, further comprising:
a terminal voltage sensor which measures the general terminal voltage; an exciter which supplies a field current to a field winding of the synchronous generator; and
an exciter controller which controls the exciter based on a difference between the terminal voltage detected by the terminal voltage detector and a target value for the terminal voltage.

9. A power generating apparatus of a renewable energy type according to claim 8, wherein the exciter controller controls the exciter such that the field current Is increased immediately after the terminal voltage of the synchronous generator decreases due to a fault event at the grid or a transmission line from the synchronous generator to the grid.

10. A power generating apparatus of a renewable energy type according to claim 8, wherein after increasing the field current by the exciter, the exciter controller controls the exciter such that the field current is increased when an internal phase angle of the synchronous generator increases and is decreased when the internal phase angle of the synchronous generator decreases.

11. A power generating apparatus of a renewable energy type according to claim 1, wherein the transmission controller has a fault event response mode in which the displacement of the hydraulic motor is reduced in comparison to the normal operating mode, wherein the fault event response mode is entered in response to detection that the measured generator terminal voltage has fallen below a threshold.

12. A power generating apparatus of a renewable energy type according to claim 11, wherein the transmission controller controls the hydraulic transmission in the fault event response mode to reduce the displacement of the hydraulic motor to regulate the difference between the load torque of the synchronous generator and the torque generated by the hydraulic motor and inputted to the synchronous generator.

13. A power generating apparatus of a renewable energy type according to claim 11, wherein the motor demand determination unit determines the demand Dm of the displacement of the hydraulic motor based on the power generated by the synchronous generator in the fault event response mode.

14. A power generating apparatus of a renewable energy type according to claim 11, wherein the transmission controller leaves the fault event response mode when the measured generator voltage rises above a threshold, which threshold is higher than the threshold which causes the transmission controller to enter the fault event response mode to implement hysteresis and avoid chatter.

15. A power generating apparatus of a renewable energy type according to claim 11, wherein the actuated element is a rotor which comprises one or more blades and the power generating apparatus further comprises a pitch driving mechanism which adjusts a pitch angle of the one or more blades, wherein the pitch driving mechanism changes the pitch angle of the one or more blades toward a feathering position in the fault event response mode.

16. A power generating apparatus of a renewable energy type according to claim 15, wherein the actuated elements is a rotor which comprises one or more blades and after recovery from the fault event starts, the pitch driving mechanism changes the pitch angle of the one or more blades toward a fine position and the motor demand determination unit increases the demand Dm of the displacement of the hydraulic motor to increase the power generated by the synchronous generator.

17. A power generating apparatus of a renewable energy type according to claim 1, wherein the power generating apparatus is a wind turbine generator which generates power using wind as the renewable energy and the actuated element is a rotor comprising at least one blade.

18. A power generating apparatus of a renewable energy type according to claim 7, wherein the displacement demand to the pump is limited such that the power obtained from the renewable energy is limited by the power delivered to the generator by the hydraulic motor.

## Patentansprüche

1. Stromerzeugungsvorrichtung vom Typ erneuerbarer Energie, die Strom unter Verwendung erneuerbarer Energie generiert, umfassend:
ein betätigtes Element, das durch von einer Quelle für erneuerbare Energie empfangene Energie betätigt wird; eine sich drehende Welle, die durch die über das betätigte Element empfangene erneuerbare Energie gedreht wird; ein Hydraulikgetriebe, das eine Hydraulikpumpe, die durch die sich drehende Welle angetrieben wird, und einen Hydraulikmotor, der durch druckbeaufschlagtes Hydraulikfluid angetrieben wird, das von der Hydraulikpumpe durch einen Hochdruckverteiler zugeführt wird, umfasst;
einen Synchrongenerator, der durch den Hydraulikmotor angetrieben wird, um Strom zu generieren, und ohne einen dazwischenliegenden Elektronikstromwandler an ein Netz gekoppelt ist, wobei der generierte Strom an das Netz geliefert wird; wobei der Generator eine Feldspule mit einer Feldstärke besitzt, einen Getriebecontroller, der das Hydraulikgetriebe in einem normalen Arbeitsmodus steuert, um die Verdrängung jeder der Hydraulikpumpe und des Hydraulikmotors so zu verstellen, dass sich die drehende Welle mit einer Drehzahl dreht, die mit der Strömungsgeschwindigkeit der erneuerbaren Energie variiert, während die Frequenz der durch den Generator generierten Elektrizität während des normalen Betriebs der Stromerzeugungsvorrichtung auf der Frequenz des Netzes gehalten wird, wobei der Getriebecontroller Folgendes umfasst:
eine Motornachfragebestimmungseinheit, die eine Nachfrage Dm der Verdrängung des Hydraulikmotors unter Berücksichtigung des Drucks in dem Hochdruckverteiler und auch unter Berücksichtigung einer Drehmomentgrenze bezüglich des durch den Generator zulässigen maximalen Drehmoments, um einen Polschlupf zu verhindern, bestimmt, wobei die Drehmomentgrenze von der Feldstärke und der gemessenen Generatorklemmenspannung abhängt,
**dadurch gekennzeichnet, dass** die Motornachfragebestimmungseinheit konfiguriert ist zum Begrenzen der Änderungsrate der Verdrängung des Motors.

2. Stromerzeugungsvorrichtung vom Typ erneuerbarer Energie nach Anspruch 1, wobei die Drehmomentgrenze in Abhängigkeit von mindestens einer Messung eines Parameters bezüglich der Feldstärke und/oder der gemessenen Generatorklemmenspannung bestimmt wird.

3. Stromerzeugungsvorrichtung vom Typ erneuerbarer Energie nach Anspruch 2, wobei die Drehmomentbegrenzung weiterhin von dem Lastwinkel und/oder der Reaktanz des Generatorfeldspulenwicklungsdrahts abhängt.

4. Stromerzeugungsvorrichtung vom Typ erneuerbarer Energie nach Anspruch 2, wobei die Verdrängung des Motors begrenzt ist auf die Drehmomentgrenze dividiert durch den Druck des durch den Motor empfangenen Hydraulikfluids.

5. Stromerzeugungsvorrichtung vom Typ erneuerbarer Energie nach Anspruch 2, wobei die Drehmomentgrenze unter Berücksichtigung gespeicherter Daten bezüglich des Drehmoments bestimmt wird, bei dem ein Polschlupf an einer Generatorklemmenspannung und einem Parameter bezüglich der Feldstärke auftreten kann.

6. Stromerzeugungsvorrichtung vom Typ erneuerbarer Energie nach Anspruch 4, wobei die Drehmomentgrenze so bestimmt wird, dass das Drehmoment des Hydraulikmotors um mindestens einen vorbestimmten Spielraum unter dem maximalen Drehmoment bleibt, bei dem ein Polschlupf auftreten würde.

7. Stromerzeugungsvorrichtung vom Typ erneuerbarer Energie nach Anspruch 1, wobei der Übertragungscontroller Folgendes umfasst:
eine Zieldrehmomentbestimmungseinheit, die im normalen Arbeitsmodus ein Zieldrehmoment der Hydraulikpumpe auf der Basis eines optimalen Drehmoments der sich drehenden Welle gemäß der Turbinendrehzahl bestimmt; eine Pumpennachfragebestimmungseinheit, die im normalen Arbeitsmodus eine Nachfrage Dp der Verdrängung der Hydraulikpumpe anhand des Zieldrehmoments der Hydraulikpumpe bestimmt; und eine Pumpensteuereinheit, die die Verdrängung der Hydraulikpumpe verstellt, um die Nachfrage Dp zu erfüllen.

8. Stromerzeugungsvorrichtung vom Typ erneuerbarer Energie nach Anspruch 1, die weiterhin Folgendes umfasst:
einen Klemmenspannungssensor, der die allgemeine Klemmenspannung misst; einen Erreger, der einen Feldstrom an eine Feldwicklung des Synchrongenerators liefert; und einen Erregercontroller, der den Erreger auf der Basis einer Differenz zwischen der durch den Klemmenspannungsdetektor detektierten Klemmenspannung und einem Zielwert für die Klemmenspannung steuert.

9. Stromerzeugungsvorrichtung vom Typ erneuerbarer Energie nach Anspruch 8, wobei der Erregercontroller den Erreger derart steuert, dass der Feldstrom unmittelbar nach dem Abnehmen der Klemmenspannung des Synchrongenerators aufgrund eines Fehlerereignisses am Netz oder einer Übertragungsleitung vom Synchrongenerator zum Netz erhöht wird.

10. Stromerzeugungsvorrichtung vom Typ erneuerbarer Energie nach Anspruch 8, wobei nach dem Erhöhen des Feldstroms durch den Erreger der Erregercontroller den Erreger derart steuert, dass der Feldstrom erhöht wird, wenn ein interner Phasenwinkel des Synchrongenerators zunimmt, und herabgesetzt wird, wenn der interne Phasenwinkel des Synchrongenerators abnimmt.

11. Stromerzeugungsvorrichtung vom Typ erneuerbarer Energie nach Anspruch 1, wobei der Getriebecontroller einen Fehlerereignisantwortmodus besitzt, in dem die Verdrängung des Hydraulikmotors im Vergleich zum normalen Arbeitsmodus reduziert wird, wobei in den Fehlerereignisantwortmodus als Reaktion auf eine Detektion eingetreten wird, dass die gemessene Generatorklemmenspannung unter einen Schwellwert gefallen ist.

12. Stromerzeugungsvorrichtung vom Typ erneuerbarer Energie nach Anspruch 11, wobei der Getriebecontroller das Hydraulikgetriebe im Fehlerereignisantwortmodus steuert, um die Verdrängung des Hydraulikmotors zu reduzieren, um die Differenz zwischen dem Lastdrehmoment des Synchrongenerators und dem durch den Hydraulikmotor generierten und in den Synchrongenerator eingegebenen Drehmoment zu regeln.

13. Stromerzeugungsvorrichtung vom Typ erneuerbarer Energie nach Anspruch 11, wobei die Motornachfragebestimmungseinheit die Nachfrage Dm der Verdrängung des Hydraulikmotors auf der Basis des durch den Synchrongenerator im Fehlerereignisantwortmodus generierten Stroms bestimmt.

14. Stromerzeugungsvorrichtung vom Typ erneuerbarer Energie nach Anspruch 11, wobei der Getriebecontroller den Fehlerereignisantwortmodus verlässt, wenn die gemessene Generatorspannung über einen Schwellwert ansteigt, wobei der Schwellwert über dem Schwellwert liegt, der bewirkt, dass der Getriebecontroller in den Fehlerantwortarbeitsmodus eintritt, um eine Hysterese zu implementieren und Flattern zu vermeiden.

15. Stromerzeugungsvorrichtung vom Typ erneuerbarer Energie nach Anspruch 11, wobei das betätigte Element ein Rotor ist, der eine oder mehrere Schaufeln umfasst, und die Stromerzeugungsvorrichtung weiterhin einen Anstellantriebsmechanismus umfasst, der einen Anstellwinkel der einen oder mehreren Schaufeln verstellt, wobei der Anstellantriebsmechanismus den Anstellwinkel der einen oder mehreren Schaufeln im Fehlerereignisantwortmodus zu einer Segelposition ändert.

16. Stromerzeugungsvorrichtung vom Typ erneuerbarer Energie nach Anspruch 15, wobei es sich bei dem betätigten Element um einen Rotor handelt, der eine oder mehrere Schaufeln umfasst und nach einer Erholung von dem Fehlerereignis startet, wobei der Anstellantriebsmechanismus den Anstellwinkel des einen oder mehreren Schaufeln zu einer Feinposition ändert und die Motornachfragebestimmungseinheit die Nachfrage Dm der Verdrängung des Hydraulikmotors erhöht, um den durch den Synchrongenerator generierten Strom zu erhöhen.

17. Stromerzeugungsvorrichtung vom Typ erneuerbarer Energie nach Anspruch 1, wobei die Stromerzeugungsvorrichtung ein Windturbinengenerator ist, der Strom unter Verwendung von Wind als die erneuerbare Energie generiert und das betätigte Element ein Rotor ist, der mindestens eine Schaufel umfasst.

18. Stromerzeugungsvorrichtung vom Typ erneuerbarer Energie nach Anspruch 7, wobei die Verdrängungsnachfrage an die Pumpe derart begrenzt wird, dass die von der erneuerbaren Energie erhaltene Leistung durch die durch den Hydraulikmotor an den Generator gelieferte Leistung begrenzt wird.

## Revendications

1. Appareil de génération d'électricité du type énergie renouvelable qui génère de l'électricité en utilisant une énergie renouvelable, comprenant :
- un élément actionné qui est actionné par l'énergie reçue d'une source d'énergie renouvelable ; un arbre rotatif qui est entraîné en rotation par l'énergie renouvelable reçue via l'élément actionné ; une transmission hydraulique qui comprend une pompe hydraulique entraînée par l'arbre rotatif et un moteur hydraulique entraîné par le fluide hydraulique sous pression fourni par la pompe hydraulique via un collecteur haute pression ; un générateur synchrone qui est entraîné par le moteur hydraulique afin de générer de l'électricité et couplé à un réseau sans convertisseur de puissance électronique intermédiaire, l'électricité générée étant fournie au réseau ; le générateur comprenant une bobine de champ possédant une puissance de champ, une unité de commande de transmission qui commande la transmission hydraulique en mode de fonctionnement normal afin d'ajuster le déplacement de chacun de la pompe hydraulique et du moteur hydraulique de sorte que l'arbre rotatif tourne à une vitesse de rotation qui varie en fonction de la vitesse d'écoulement de l'énergie renouvelable tout en maintenant la fréquence de l'électricité générée par le générateur sur la fréquence du réseau pendant le fonctionnement normal de l'appareil de génération d'électricité, laquelle unité de commande de transmission comprend :
- une unité de détermination de demande de moteur qui détermine une demande Dm du déplacement du moteur hydraulique en tenant compte de la pression dans le collecteur haute pression, et en tenant également compte d'une limite de couple concernant le couple maximal autorisé par le générateur afin d'éviter un glissement de pole, laquelle limite de couple dépend de la puissance de champ, et de la tension de borne de générateur mesurée,
**caractérisé en ce que** l'unité de détermination de demande de moteur est conçue pour limiter le taux de changement de déplacement du moteur.

2. Appareil de génération d'électricité du type énergie renouvelable selon la revendication 1, dans lequel la limite de couple est déterminée en fonction d'au moins une mesure d'un paramètre lié à la puissance de champ et/ou à la tension de borne de générateur mesurée.

3. Appareil de génération d'électricité du type énergie renouvelable selon la revendication 2, dans lequel la limite de couple dépend également de l'angle de charge et/ou de la réactance du fil d'enroulement de la bobine de champ du générateur.

4. Appareil de génération d'électricité du type énergie renouvelable selon la revendication 2, dans lequel le déplacement du moteur est limité à la limite de couple divisée par la pression du fluide hydraulique reçu par le moteur.

5. Appareil de génération d'électricité du type énergie renouvelable selon la revendication 2, dans lequel la limite de couple est déterminée en tenant compte de données stockées associant le couple auquel le glissement de pole peut se produire à la tension de borne du générateur, et d'un paramètre concernant la puissance du champ.

6. Appareil de génération d'électricité du type énergie renouvelable selon la revendication 4, dans lequel la limite de couple est déterminée de sorte que le couple du moteur hydraulique reste en dessous du couple maximal auquel le glissement de pole se produirait selon au moins une marge prédéterminée.

7. Appareil de génération d'électricité du type énergie renouvelable selon la revendication 1, dans lequel l'unité de commande de transmission comprend :
- une unité de détermination de couple cible qui, en mode de fonctionnement normal, détermine un couple cible de la pompe hydraulique en fonction d'un couple optimal de l'arbre rotatif en fonction d'une vitesse de turbine ; une unité de détermination de demande de pompe qui, en mode de fonctionnement normal, détermine une demande Dp de déplacement de la pompe hydraulique depuis un couple cible de la pompe hydraulique ; et une unité de commande de pompe qui ajuste le déplacement de la pompe hydraulique pour répondre à la demande Dp.

8. Appareil de génération d'électricité du type énergie renouvelable selon la revendication 1, comprenant en outre :
- un capteur de tension de borne qui mesure la tension de borne générale ; un excitateur qui fournit un courant de champ à un enroulement de champ du générateur synchrone ; et une unité de commande d'excitateur qui commande l'excitateur en fonction d'une différence entre la tension de borne détectée par le détecteur de tension de borne et une valeur cible de la tension de borne.

9. Appareil de génération d'électricité du type énergie renouvelable selon la revendication 8, dans lequel l'unité de commande d'excitateur commande l'excitateur de sorte que le courant de champ soit augmenté immédiatement après une baisse de la tension de borne du générateur synchrone due à un événement de panne au niveau du réseau ou d'une ligne de transmission du générateur synchrone au réseau.

10. Appareil de génération d'électricité du type énergie renouvelable selon la revendication 8, dans lequel, après l'augmentation du courant de champ par l'excitateur, l'unité de commande d'excitateur commande l'excitateur de sorte que le courant de champ soit augmenté lorsqu'un angle de phase interne du générateur synchrone augmente, et soit diminué lorsque l'angle de phase interne du générateur synchrone diminue.

11. Appareil de génération d'électricité du type énergie renouvelable selon la revendication 1, dans lequel l'unité de commande de transmission possède un mode de réponse à un événement de panne dans lequel le déplacement du moteur hydraulique est réduit par rapport au mode de fonctionnement normal, lequel mode de réponse à un événement de panne est activé suite à la détection du fait que la tension de borne de générateur mesurée a chuté en dessous d'un seuil.

12. Appareil de génération d'électricité du type énergie renouvelable selon la revendication 11, dans lequel l'unité de commande de transmission commande la transmission hydraulique en mode de réponse à un événement de panne afin de réduire le déplacement du moteur hydraulique pour ajuster la différence entre le couple de charge du générateur synchrone et le couple généré par le moteur hydraulique et envoyé au générateur synchrone.

13. Appareil de génération d'électricité du type énergie renouvelable selon la revendication 11, dans lequel l'unité de détermination de demande de moteur détermine la demande Dm de déplacement du moteur hydraulique en fonction de la puissance générée par le générateur synchrone en mode de réponse à un événement de panne.

14. Appareil de génération d'électricité du type énergie renouvelable selon la revendication 11, dans lequel l'unité de commande de transmission sort du mode de réponse à un événement de panne lorsque la tension de générateur mesurée augmente au-dessus d'un seuil, lequel seuil est supérieur au seuil qui fait que l'unité de commande de transmission passe en mode opératoire de réponse à panne afin de mettre en oeuvre une hystérèse et éviter un bruit.

15. Appareil de génération d'électricité du type énergie renouvelable selon la revendication 11, dans lequel l'élément actionné est un rotor qui comprend une ou plusieurs pales, et l'appareil de génération d'électricité comprend en outre un mécanisme d'actionnement de pas qui ajuste l'angle de pas d'une ou de plusieurs pales, le mécanisme d'actionnement de pale changeant l'angle de pas de la ou des pales vers une position en drapeau en mode de réponse à un événement de panne.

16. Appareil de génération d'électricité du type énergie renouvelable selon la revendication 15, dans lequel l'élément actionné est un rotor qui comprend une ou plusieurs pales et, après le début de rétablissement suite à l'événement de panne, le mécanisme d'actionnement de pas change l'angle de pas de la ou des pales vers une position fine, et l'unité de détermination de demande de moteur augmente la demande Dm de déplacement du moteur hydraulique afin d'augmenter la puissance générée par le générateur synchrone.

17. Appareil de génération d'électricité du type énergie renouvelable selon la revendication 1, l'appareil de génération d'électricité étant un générateur à éolienne qui génère de l'électricité en utilisant le vent en qualité d'énergie renouvelable, et l'élément actionné est un rotor comprenant au moins une pale.

18. Appareil de génération d'électricité du type énergie renouvelable selon la revendication 7, dans lequel la demande de déplacement pour la pompe est limitée de sorte que la puissance obtenue à partir de l'énergie renouvelable est limitée par la puissance fournie au générateur par le moteur hydraulique.
